(19) Europäisches Patentamt
European Patent Office
Office européen des brevets

(11) **EP 3 502 524 A1**

(12) **EUROPÄISCHE PATENTANMELDUNG**

(43) Veröffentlichungstag:
**26.06.2019 Patentblatt 2019/26**

(51) Int Cl.:
***F16J 15/34*** *(2006.01)* ***F16J 15/36*** *(2006.01)*

(21) Anmeldenummer: **18000981.3**

(22) Anmeldetag: **19.12.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **21.12.2017 DE 102017012105**

(71) Anmelder: **KACO GmbH + Co. KG**
**74912 Kirchardt (DE)**

(72) Erfinder: **von Dobrzewinski, Pascal**
**68723 Schwetzingen (DE)**

(74) Vertreter: **Kohl, Karl-Heinz**
**Jackisch-Kohl und Kohl**
**Stuttgarter Straße 115**
**70469 Stuttgart (DE)**

(54) **GLEITRINGDICHTUNG SOWIE AGGREGAT MIT EINER SOLCHEN GLEITRINGDICHTUNG**

(57) Die Gleitringdichtung hat wenigstens einen Dichtring (12, 22), der mit einer Dichtfläche unter Bildung eines Dichtspaltes an einem zweiten Dichtring anliegt und mit einer elastisch verformbaren Membran (10) verbunden ist. Sie überdeckt den Dichtring (12, 22) an einer Stirnseite und ist auf der vom Dichtring (12, 22) abgewandten Seite druckbeaufschlagt. Um starke Zugbelastungen in der Membran (Balg) zumindest zu verringern und eine hohe Belastung auf die Verbindungsstellen zwischen der Membran und dem Dichtring zu vermindern, weist die Membran (10) einen an den Anbindungsbereich (13) anschließenden Kegelabschnitt (20) auf, der in unbelastetem Zustand einen solchen axialen Abstand (A) von der Stirnseite (15) des Dichtringes (12, 22) hat, dass sich der Kegelabschnitt (20) in Abhängigkeit vom Druck im Mediumsraum (28) durch elastische Verformung mehr oder weniger an die Stirnfläche (15) des Dichtringes (12, 22) anlegt. Dadurch stellt sich das Verhältnis von spaltschließender Kraft (Fs) und spaltöffnender Kraft (Fo) im Dichtspalt ein.

14
2a
9
8
6
7
31
32
2b
22
28
23
26
10
12
16
27
29
17
30

Fig. 4

EP 3 502 524 A1

## Beschreibung

Die Erfindung betrifft eine Gleitringdichtung nach dem Oberbegriff des Anspruches 1 und ein Aggregat gemäß Anspruch 18.

Gleitringdichtungen werden in vielen Anwendungen eingesetzt, um unterschiedliche Medien, wie Luft, Abgase, Wasser, glykolbasierte Gemische, Öl und dergleichen abzudichten. Insbesondere bei Wasserpumpen sind die Gleitringdichtungen weit verbreitet.

Eine Ausführungsform solcher Gleitringdichtungen sind gasgeschmierte Gleitringdichtungen. Sie bauen mit Hilfe von aerodynamischen Strukturen im Dichtspalt zwischen den Gleitpartnern ein Luftpolster auf und gewährleisten somit einen praktisch reibungsfreien Betrieb.

Darüber hinaus existieren Gleitringdichtungen mit hydrodynamisch wirksamen Strukturen, die eine Ein- und Rückförderung von Fluiden in den Dichtspalt ermöglichen. Bei richtiger Auslegung lassen sich Reibung und Leckage minimieren.

Herkömmliche Gleitringdichtungen bestehen aus einer Vielzahl von Teilen. Sie haben einen Gleit- und einen Gegenring. Der Gleitring wird mittels einer Feder axial gegen den Gegenring gedrückt. Zwischen dem Gleitring und seinem Gehäuse befindet sich eine Sekundärdichtung, die üblicherweise durch O-Ringe, X-Ringe und dergleichen gebildet wird. Auch ist es bekannt, als Sekundärdichtung einen elastisch verformbaren Balg einzusetzen.

Die große Zahl von Teilen herkömmlicher Gleitringdichtungen führt zu hohen Kosten und zu einer hohen Komplexität bei den produktbegleitenden Prozessen. Die Sekundärdichtelemente führen zu zusätzlichen Reibungskräften, die aufgrund unterschiedlicher Toleranzen der Bauteile in einem breiten Toleranzfeld liegen. Beim Einsatz von O-Ringen, X-Ringen und dgl. werden die Reibungskräfte zusätzlich verstärkt, so dass diese zusätzlich zu den Toleranzeinflüssen in einem breiten Bereich variieren. Stark schwankende oder zu hohe Reibkräfte können zu Fehlstellungen des Gleitringes führen. Im Extremfall trennen sich die Gleitpartner gar nicht voneinander, oder es kommt zu einem Aushängen des Gleitringes, so dass der Dichtspalt nicht mehr geschlossen wird. Diese Effekte kommen insbesondere bei gasgeschmierten Gleitringdichtungen zum Tragen und können zum Versagen des gesamten Systems führen.

Es sind Gleitringdichtungen bekannt (DE 10 2011 122 477 A1), bei denen ein Balg als Sekundärelement eingesetzt wird. Der Reibungszustand ist nur von den inneren Reibungszuständen des Balges abhängig. Ein Reibungseinfluss infolge von Fertigungstoleranzen besteht nicht. Allerdings sind solche Gleitringdichtungen verhältnismäßig teuer und komplex. Die Funktionen von Axialkraftaufbringung und Abdichtung mittels Sekundärdichtung sind getrennt. Durch Druckeinflüsse wird der Balg deformiert und Axialkraftkomponenten, vornehmlich Zugkräfte, werden erzeugt. Die Summe der axialen Kräfte wird jedoch durch die Feder, die weitgehend unabhängig von Betriebszuständen ist, dominiert. So ist in allen Betriebszuständen gewährleistet, dass die Dichtung sicher schließt und ihre Funktion erfüllt.

Darüber hinaus sind Gleitringdichtungen bekannt, bei denen ein elastisch verformbarer Balg die Feder- und Abdichtwirkung einer Sekundärdichtung erzielt (DE 10 2004 035 658 B4). Die Komplexität und Anzahl der Bauteile werden reduziert, und Kosten des Produktes und in der Fertigung können eingespart werden. Durch Fehlen einer klassischen Feder zur Axialkraftaufbringung wird die Axialkraft ausschließlich durch den elastisch verformbaren Balg aufgebracht. Die Axialkraft ist damit im Wesentlichen vom Verformungszustand des Balges abhängig. Insbesondere kann es bei Druckeinwirkung zu Deformationen kommen, die sich negativ auf die Funktion der Dichtung auswirken.

Bei einer anderen bekannten Gleitringdichtung (DE 10 2016 006 106 A1) dient eine Membran, mit welcher der eine Dichtring gegen den anderen Dichtring axial belastet wird, als Dicht- und als Federelement. Die Membran ist so angeordnet, dass sie durch den Mediumsdruck vom Dichtring weggebogen wird.

Nachteilig bei den bekannten Gleitringdichtungen ist das Verhalten unter Druck. Der auftretende Druck bewirkt Zugbelastungen auf den Balg. Dadurch kommt es zu einer Verhärtung der Federeigenschaften des Balges und zu starken Belastungen an der Verbindungsstelle zwischen dem Balg und dem Gleitring. Ebenso kann die Zugbelastung im Balg eine so große axiale Kraftkomponente erzeugen, dass die Dichtung öffnet und in Ihrer Funktion versagt.

Der Erfindung liegt die Aufgabe zugrunde, die gattungsgemäße Gleitringdichtung sowie das Aggregat so auszubilden, dass starke Zugbelastungen in der Membran (Balg) zumindest verringert und eine hohe Belastung auf die Verbindungsstellen zwischen der Membran und dem Dichtring vermindert bzw. vollständig vermieden werden. Außerdem soll in einfacher Weise ein Kräfte- bzw. Druckgleichgewicht der spaltöffnenden und der spaltschließenden Kräfte erreicht werden und die Pressungsverteilung im Dichtspalt vorteilhaft ausgestaltet werden.

Diese Aufgabe wird bei der gattungsgemäßen Gleitringdichtung erfindungsgemäß mit den kennzeichnenden Merkmalen des Anspruches 1 und beim Aggregat gemäß den Merkmalen des Anspruches 18 gelöst.

Die erfindungsgemäße Gleitringdichtung zeichnet sich dadurch aus, dass die Membran auf ihrer vom Dichtring abgewandten Seite druckbeaufschlagt wird. Dies führt zu einer in Abhängigkeit des Druckes entsprechenden elastischen Verformung der Membran. Die Membran kann so ausgelegt werden, dass die auf den Dichtspalt wirkenden spaltschließenden Kräfte durch die elastische Membranverformung so beeinflusst werden können, dass sich ein vorteilhaftes Verhältnis zwischen den spaltöffnenden und den spaltschließenden Kräften am Dichtspalt ergibt. Die Membran hat den an den Anbindungsbereich anschließenden Kegelabschnitt. Im unbelasteten Zustand hat der Kegelabschnitt einen solchen axialen Abstand von der Stirnseite des Dichtringes, dass sich der Kegelabschnitt in Abhängigkeit vom Druck im Mediumsraum durch elastische Verformung mehr oder weniger an die Stirnfläche des Dichtringes anlegt. Dadurch stellt sich das Verhältnis von spaltschließender Kraft und spaltöffnender Kraft im Dichtspalt ein.

Die Anbindung der Membran an den Dichtring kann im Bereich des größten oder des kleinsten Durchmessers der Membran erfolgen.

Eine besonders vorteilhafte Verbindung zwischen der Membran und dem Dichtring ergibt sich, wenn die Membran mittels einer Klemmhülse mit dem Dichtring verbunden wird. Die Verbindung ist ebenso als stoffschlüssige Verbindung, insbesondere durch Verklebung, realisierbar.

Bevorzugt ist die Membran an eine der Gleitfläche gegenüberliegende Stirnfläche des Dichtringes angebunden. Dadurch lässt sich die Verbindung zwischen der Membran und dem Dichtring einfach herstellen.

Die Anbindung der Membran an dieser Stirnfläche des Dichtringes kann im radial äußeren oder radial inneren Bereich erfolgen.

Mit der Membran kann der Dichtring mit einem Gehäuse oder einem Halteteil der Gleitringdichtung verbunden werden. Das Gehäuse bzw. das Halteteil sind feststehend angeordnet, so dass der Dichtring beim Einsatz der Gleitringdichtung nicht gedreht wird.

Grundsätzlich ist es aber auch möglich, den Dichtring über die Membran drehfest mit einem mit der Welle verbundenen Halteteil zu verbinden. Dann wird der Dichtring im Einsatz um seine Achse gedreht.

Wenn die Anbindung der Membran an die Stirnfläche des Dichtringes erfolgt, erstreckt sich der Dichtring von der Anbindungsstelle aus radial nach außen oder nach innen, je nachdem, ob sich die Anbindungsstelle im radial inneren oder im radial äußeren Bereich der Stirnfläche des Dichtringes befindet.

Bei einer vorteilhaften Ausführungsform weist die Membran einen Kegelabschnitt auf, der sich zwischen den Anbindungsstellen am Dichtring und am Gehäuse bzw. am Halteteil erstreckt. Dieser zwischen den beiden Anbindungsstellen liegende Kegelabschnitt kann hinsichtlich radialer Breite, Kegelwinkel, Dicke dieses Kegelabschnittes sowie Material des Kegelabschnittes so ausgewählt werden, dass die im Dichtspalt wirkende, durch die elastische Verformung des Kegelabschnittes erzeugte spaltschließende Kraft in einem optimalen Verhältnis zur spaltöffnenden Kraft steht. Der Kegelwinkel, die radiale Breite des Kegelabschnittes, die Dicke des Kegelmantelabschnittes sowie dessen Material können in Kombination so eingestellt werden, dass sich diese vorteilhafte Größe der spaltschließenden Kraft ergibt. Dadurch ist es möglich, die Gleitringdichtung optimal auf den vorgesehenen Einsatzfall abzustimmen.

Grundsätzlich reicht es aus, wenn die Gleitringdichtung nur einen Dichtring aufweist. Er wirkt dann in der Einbaulage mit einem entsprechenden zweiten Dichtring zusammen, der im Aggregat vorgesehen und beispielsweise durch einen Bauteil des Aggregates selbst gebildet sein kann.

Bei einer anderen vorteilhaften Ausbildung ist die Gleitringdichtung mit einem zweiten Dichtring versehen. Dann liegen die beiden Dichtringe der Gleitringdichtung unter Axialkraft aneinander und können zusammen mit der Gleitringdichtung in ein entsprechendes Aggregat eingebaut werden.

Allgemein kann durch die Gestaltung der Kontur der Stirnfläche des Dichtringes der Kraftverlauf der spaltschließenden Kraft positiv beeinflusst werden.

Bei einer vorteilhaften Ausführungsform geht diese Stirnfläche, an welcher die Membran bei ihrer elastischen Verformung zur Anlage kommen kann, über eine Abschrägung oder über einen Absatz in eine äußere Mantelfläche des Dichtringes über. Die Abschrägung kann unterschiedlich gestaltet sein, je nach dem, für welchen Einsatzfall die Gleitringdichtung vorgesehen ist.

Das erfindungsgemäße Aggregat, das insbesondere eine Kühlmittelpumpe, ein Turbolader, ein Kurbelgehäuse oder ein Getriebe von Fahrzeugen ist, ist mit der erfindungsgemäßen Gleitringdichtung ausgestattet. Sie gewährleistet, dass eine einwandfreie Abdichtung sichergestellt ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert.

Es zeigen

| | |
|---|---|
| Fig. 1 | im Axialhalbschnitt eine erfindungsgemäße Gleitringdichtung, |
| Fig. 2 und Fig. 3 | in Darstellungen entsprechend Fig. 1 weitere Ausführungsformen von erfindungsgemäßen Gleitringdichtungen, |
| Fig. 4 | die erfindungsgemäße Gleitringdichtung gemäß Fig. 1 im eingebauten Zustand, |

Fig. 5 im Axialhalbschnitt eine Dichtungsanordnung, die aus zwei erfindungsgemäßen Gleitringdichtungen gebildet ist,

Fig. 6 bis Fig. 9 jeweils im Halbschnitt weitere Ausführungsformen von erfindungsgemäßen Gleitringdichtungen.

Die im Folgenden beschriebenen Gleitringdichtungen sind so ausgebildet, dass die spaltschließenden Kräfte zwischen den Dichtringen durch eine Membranverformung beeinflusst werden können.

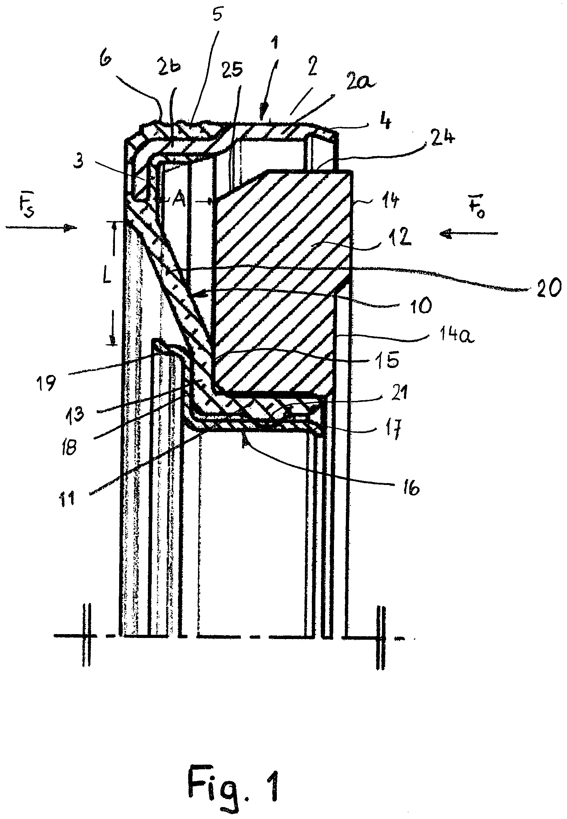

Die Gleitringdichtung hat ein ringförmiges Gehäuse 1 (Fig. 1), das aus Metall, aus einem harten Kunststoff oder einem Verbundmaterial bestehen kann. Das Gehäuse 1 hat etwa L-förmigen Querschnitt und weist einen zylindrischen Ringteil 2 auf, der im Ausführungsbeispiel aus zwei radial gegeneinander versetzt angeordneten Ringabschnitten 2a, 2b besteht, die jeweils zylindrisch ausgebildet sind. Der im Durchmesser kleinere Ringabschnitt 2b geht an seinem freien Ende in einen radial nach innen gerichteten Ringflansch 3 über.

Das freie Ende des im Durchmesser größeren Ringabschnittes 2a kann mit einer schräg nach innen gerichteten Abwinkelung 4 versehen sein.

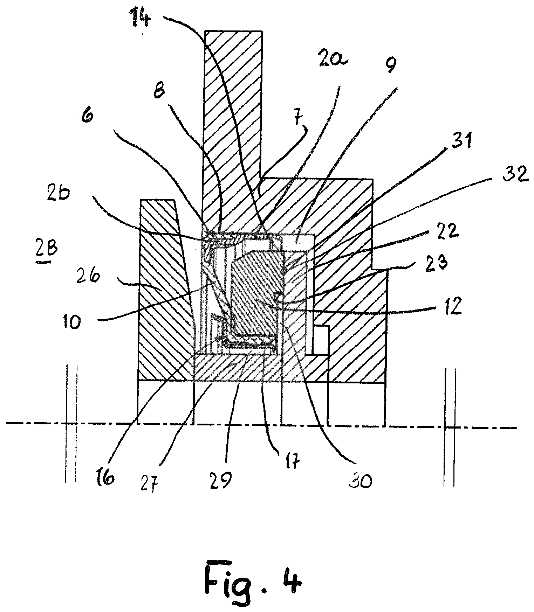

Der Ringabschnitt 2b ist von einer Ummantelung 5 innen- und außenseitig bedeckt. Sie besteht vorteilhaft aus elastomerem Material. Im Bereich des Ringabschnittes 2b ist die Ummantelung 5 an ihrer Außenseite vorteilhaft mit einer Profilierung 6 versehen. Sie ist vorteilhaft wellenförmig ausgebildet. Wird die Gleitringdichtung eingebaut (Fig. 4), dann bildet die Ummantelung 5 im Bereich des Ringabschnittes 2b eine statische Abdichtung. Beim Einpressen der Gleitringdichtung in ein aggregatseitiges Gehäuse 7 wird die Ummantelung 6 elastisch radial zusammengedrückt. Aufgrund der vorteilhaften wellenförmigen Profilierung 6 ergibt sich in der Einbaulage infolge der elastischen Verformung eine flächige Anlage der Ummantelung 6 an einer Wandung 8 eines Einbauraumes 9 im Gehäuse 7 (Fig. 4). Der Ringabschnitt 2a liegt mit Presssitz im Einbauraum 9.

Die Ummantelung 5 bedeckt vorteilhaft auch den Ringflansch 3 innen- und außenseitig. Dadurch ist auch der Ringflansch 3 durch die Ummantelung 5 geschützt.

Vorteilhaft ist es, wenn die Ummantelung 5 einstückig mit einer Membran 10 ausgebildet ist, die Kegelform hat und an ihrem radial inneren Ende in einen zylindrischen Hülsenabschnitt 11 übergeht. Auf ihm sitzt ein Dichtring 12.

Am Übergang zum Hülsenabschnitt 11 ist die Membran 10 mit einem in einer Radialebene liegenden Ringabschnitt 13 versehen, an der der Dichtring 12 mit einer der Gleitfläche 14 gegenüberliegenden Stirnfläche 15 anliegt. Die radiale Breite des Ringabschnittes 13 ist geringer als die radiale Breite der Stirnfläche 15 des Dichtringes 12. Die radiale Breite des Ringabschnittes 13 ist in vorteilhafter Weise geringer als die halbe radiale Breite der Stirnfläche 15.

Der Hülsenabschnitt 11 der Membran 10 umgibt eine Haltehülse 16, die aus Metall, einem harten Kunststoff oder Verbundmaterial bestehen kann.

Das freie Ende 17 der Haltehülse 16 ist vorteilhaft radial schräg nach innen abgewinkelt. Dadurch ist ein einfacher Zusammenbau der Gleitringdichtung möglich.

Am anderen Ende geht die Haltehülse 16 in einen radial nach außen verlaufenden Ringflansch 18 über, dessen freies Ende zu einem zylindrischen Ring 19 geformt ist, der etwa in Höhe des Überganges des Ringabschnittes 13 in den kegelförmigen Abschnitt 20 der Membran 10 liegt. Der Ringabschnitt 13 der Membran 10 liegt sowohl am Ringflansch 18 der Hülse 16 als auch an der Stirnfläche 15 des Dichtringes 12 flächig an.

Der Hülsenabschnitt 11 ist an seiner Innenseite vorteilhaft mit einer radial nach innen umfänglich vorstehenden Erhebung 21 versehen, die in der Einbaulage elastisch verformt ist, so dass der Hülsenabschnitt 11 der Membran 10 fest auf dem Zylinderabschnitt 17 der Haltehülse 16 sitzt. Zusätzlich kann zur drehfesten Verbindung des Hülsenabschnittes 11 mit der Haltehülse 16 ein Klebemittel verwendet werden.

Der Dichtring 12 ragt axial über den Hülsenabschnitt 11 und die Haltehülse 16 vor. Dadurch ist sichergestellt, dass der Dichtring 12 in der Einbaulage mit einem Dichtring 22 zuverlässig in dichtenden Kontakt kommt (Fig. 4). Der Dichtring 22 sitzt drehfest auf der abzudichtenden Welle.

Im Ausführungsbeispiel liegt der Dichtring 12 nur über einen Teil seiner radialen Breite an der Stirnseite 23 des Dichtringes 22 flächig an. Die Gleitfläche 14 ist an einem axial vorstehenden äußeren Ringbereich des Dichtringes 12 vorgesehen.

Der Hülsenabschnitt 11 der Membran 10 und der Zylinderabschnitt 17 der Haltehülse 16 sowie der radial innere Bereich des Dichtringes 12 haben etwa gleiche axiale Breite. Dadurch ist der Dichtring 12 sicher gehalten und abgestützt.

Der Hülsenabschnitt 11 der Membran 10 dient in der Einbaulage als zusätzliche statische Abdichtung des Dichtringes 12 gegenüber der Haltehülse 16.

Am Übergang von der Stirnfläche 15 zur äußeren zylindrischen Mantelfläche 24 ist der Dichtring 12 mit einer Abschrägung 25 versehen, so dass der Dichtring 12 in diesem Bereich mit einer Kegelfläche versehen ist.

Die Mantelfläche 24 des Dichtringes 12 hat radialen Abstand vom Ringteil 2 des Gehäuses 1. Der Kegelabschnitt 20 der Membran 10 hat vom Ringabschnitt 13 ausgehend zunehmend größeren Abstand von der Stirnfläche 15 des Dichtringes 12.

Fig. 4 zeigt beispielhaft, dass auf der Welle drehfest ein Flügelrad 26 sitzt, das mit Abstand vom Dichtring 22 angeordnet ist. Zwischen dem Flügelrad 26 und dem Dichtring 22 sitzt auf der Welle eine Zwischenhülse 27, an der das Flügelrad 26 sowie der Dichtring 22 axial anliegen.

Wie sich aus Fig. 4 ergibt, wird die Gleitringdichtung so eingebaut, dass die Membran 10 der Druck- bzw. Mediumsseite 28 zugewandt ist. Das abzudichtende Medium beaufschlagt daher die Membran 10, die den Dichtring 12 auf dessen der Gleitfläche 14 gegenüberliegenden Stirnfläche 15 gegen das Medium abschirmt.

Der Zylinderabschnitt 17 der Haltehülse 16 hat radialen Abstand von der Zwischenhülse 27. Zwischen dem Zylinderabschnitt 17 der Haltehülse 16 und der Zwischenhülse 27 wird ein Ringraum 29 gebildet, durch den das Medium in den Bereich zwischen dem Dichtring 12 und dem Dichtring 22 gelangen kann. Zwischen beiden Dichtringen wird infolge der radial zurückgesetzten Stirnseite des Dichtringes 12 ein schmaler, in einer Radialebene liegender Ringraum 30 gebildet, über den das Medium an einen Dichtspalt 31 zwischen dem Dichtring 12 und dem Dichtring 22 gelangen kann. Der Dichtspalt 31 wird zwischen der Gleitfläche 14 des Dichtringes 12 und der benachbarten Gleitfläche 32 des Dichtringes 22 gebildet.

Vorteilhaft können in der Gleitfläche 14 des Dichtringes 12 und/oder in der Gleitfläche 32 des Dichtringes 22 aerodynamische oder hydraulisch wirksame Strukturen vorhanden sein, die bei entsprechenden Drehzahlen der Welle ein Luft- bzw. Flüssigkeitspolster zwischen dem Dichtring 12 und dem Dichtring 22 aufbauen, so dass ein nahezu reibungsfreier Betrieb der Gleitringdichtung möglich ist.

Die Membran 10 übt eine axiale Kraft auf den Dichtring 12 derart aus, dass er gegen den Dichtring 22 gedrückt wird. Die Membran 10 ist so ausgebildet, dass sie auch ohne Druck auf der Mediumsseite 28 eine axiale Kraft auf den Dichtring 12 ausübt. Steigt der Druck auf der Mediumsseite 28, verformt sich der Kegelabschnitt 20 der Membran 10 elastisch in Richtung auf den Dichtring 12. Der Kegelabschnitt 20 schmiegt sich hierbei an die Stirnfläche 15 des Dichtringes 12 an. Je stärker der auf den Kegelabschnitt 20 wirkende Druck wirkt, desto mehr schmiegt sich der Kegelabschnitt 20 unter elastischer Verformung an die Stirnfläche 15 an.

In der Einbaulage wirkt auf den Kegelabschnitt 20 der Membran 10 die spaltschließende Kraft $F_s$. Dieser spaltschließenden Kraft entgegengerichtet ist die spaltöffnende Kraft $F_o$. Um den Dichtspalt 31 zu schließen, muss die Bedingung $F_s > F_o$ erfüllt sein. Anderenfalls würde der Dichtspalt 31 geöffnet werden.

Die spaltschließende Kraft $F_s$ setzt sich aus einem statischen Kraftanteil durch Positionierung der Dichtung in Einbaulage und einem druckbedingten Anteil zusammen.

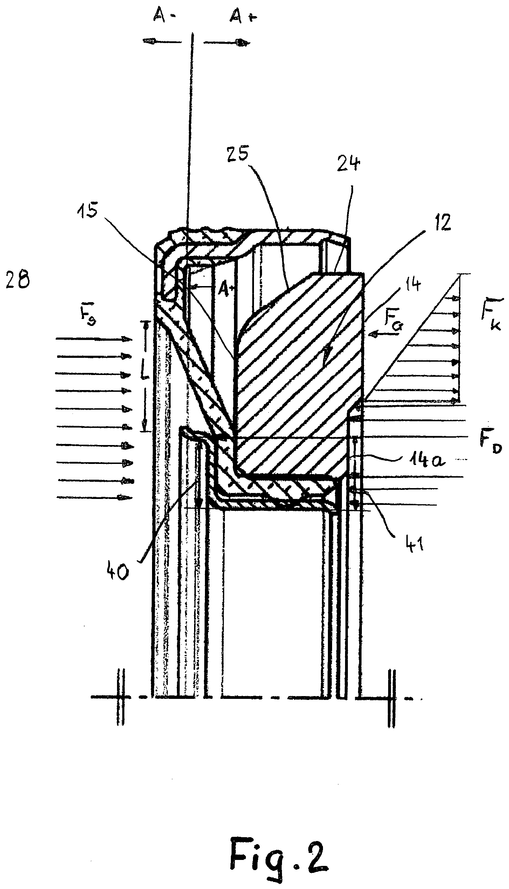

Die spaltöffnende Kraft $F_0$ setzt sich (Fig. 2) aus der im Dichtspalt 31 über die Gleitfläche 14 wirksamen Kraft $F_G$ und der druckbedingten Kraft $F_D$ zusammen ($F_0 = F_G + F_D$).

In Fig. 1 ist der Bereich, in dem der druckbedingte Kraftanteil der Kraft $F_s$ auf den Kegelabschnitt 20 wirkt, mit L bezeichnet. Die radiale Breite dieses Bereiches wird durch die Anbindung des Kegelabschnittes 20 an den Ringflansch 3 sowie den radial äußeren Rand des Ringflansches 18 der Haltehülse 16 bestimmt. Nur in diesem Bereich L lässt sich der Kegelabschnitt 20 elastisch verformen. In dem Bereich, in welchem der Ringflansch 18 der Haltehülse 16 den Ringabschnitt 13 der Membran 10 abdeckt, wird die druckbedingte Kraft $F_s$ durch eine gleichgroße druckbedingte Gegenkraft $F_D$ ausgeglichen. Wegen der gleichgroßen druckwirksamen Flächen 40, 41 herrscht hier ein Kraftausgleich.

Die Gleitfläche 14 des Dichtringes 12 und die Membrane 10 sind so aufeinander ausgelegt, dass die Kontaktkraft im Dichtspalt 31 am Übergang der Gleitfläche 14 zum zurückgesetzten Stirnflächenabschnitt 14a maximal wird. In Fig. 2 ist die im Dichtspalt 31 auf der Gleitfläche 14 wirkende, durch die spaltschließende Kraft $F_s$ erzeugte Kontaktkraft $F_K$ eingezeichnet. Erkennbar ist, dass die Kontaktkraft $F_K$ im beschriebenen Übergangsbereich von der Gleitfläche 14 zum Medienraum 28, 30 (Fig. 2 und 4) am größten ist und radial nach außen abnimmt. Es sind auch andere Verläufe der Kontaktkraft denkbar. Wesentlich dabei ist, dass die Kontaktkraft $F_k$ am Übergang der Gleitfläche 14 zum Medienraum 28, 30 maximal ist und am Übergang der Gleitfläche 14 zum nicht Medium führenden Raum minimal oder gar 0 wird. Der Verlauf dieser Kontaktkraft $F_K$ und damit die im Dichtspalt 31 herrschende Kontaktpressung kann durch eine entsprechende Formgebung des Dichtringes 12 anwendungsspezifisch eingestellt werden und wird direkt durch die Eigenschaft der sich deformierenden balgförmigen Membran 10 beeinflusst. Wesentliches Ziel ist die Anordnung und Auslegung der Membrane 10 derart, dass die maximale Kontaktpressung im Dichtspalt an der Gleitfläche 14 immer, d. h. im statischen Zustand und bei Druckbelastung durch das Medium, den maximalen Wert des Kontaktverlaufes über die Gleitfläche 14 annimmt, wie er in Fig. 2 beispielhaft eingezeichnet ist, und dass die elastische Verformung des Kegelabschnittes 20 dies in jeder Lage unterstützt bzw. erst ermöglicht.

In Fig. 1 ist das Maß A eingetragen, das den Abstand der Ummantelung 3 von der Stirnfläche 15 kennzeichnet.

Die spaltschließende Kraft $F_s$ ergibt sich wie folgt:

$$F_s = F_{Memb.st} - F_{Memb.dyn} + F_p$$

Hierbei bedeuten:

$F_{Memb.st}$ axiale Kraft der Membran 10 in Einbaulage

$F_{Memb.dyn}$ axiale Kraftkomponente der Membran 10 in Einbaulage und unter Druckeinfluss.

$F_p$ axiale Kraftkomponente der druckwirksamen Fläche infolge der Druckbeaufschlagung in der Einbaulage der Gleitringdichtung.

In der Einbaulage bewirkt die vorgespannte Membran 10 die Axialkraft $F_{Memb.st}$, die das Dichtungssystem schließt. Die Membran 10 wird so ausgebildet, dass sich in der Einbauposition der Gleitringdichtung die beschriebene axiale Verpressung zwischen dem Dichtring 12 und dem Dichtring 22 ergibt. Die Membran 10 wirkt als axiale Feder und bildet ein Sekundärdichtelement.

Bei einer Druckbeaufschlagung der Membran 10 durch das Medium auf der Mediumsseite 28 kommt es zu einer elastischen Verformung der Membran 10. Dadurch entsteht im Kegelabschnitt 20 der Membran 10 eine Zugkraft, deren axiale Komponente die Kraft $F_{Memb.dyn}$ ist.

Durch den Druck auf der Mediumsseite 28 entsteht die druckabhängige Kraftkomponente $F_p$. Sie ergibt sich aus der druckwirksamen Fläche im Bereich L und dem auf diesen Bereich wirkenden Druck.

Die druckwirksame Fläche ist von der Deformation der Membran 10 und der Ausgestaltung der Stirnfläche 15 des Dichtringes 12 abhängig, an der der Kegelabschnitt 20 zur Anlage kommt.

Durch die Dicke des Kegelabschnittes 20 der Membran 10 und/oder den Membranwerkstoff lässt sich zusätzlich die Größe der Verformung und der auf den Dichtring 12 wirkenden Kraft gezielt beeinflussen.

Das Maß A gibt an, bei welcher Kraft $F_s$ sich der Kegelabschnitt 20 unter elastischer Verformung an die Stirnseite 15 des Dichtringes 12 in Einbaulage anlegt. Je höher die Kraft $F_s$ ist, umso mehr legt sich der Kegelabschnitt 20 an die Stirnfläche 15 des Dichtringes 12 an. Je größer das Maß A eingestellt wird, umso größer muss die Kraft $F_s$ ausfallen, damit sich der Kegelabschnitt 20 an die Stirnfläche 15 des Dichtringes 12 anlegt. Wird dieses Maß A im Verhältnis zum Maß L zu groß gewählt, so überwiegt die Kraftkomponente $F_{Memb.dyn}$ und es besteht Gefahr, dass die Dichtung öffnet.

Eine hervorragende Auslegung der Membran 10 hinsichtlich der spaltschließenden $F_s$ ergibt sich, wenn folgender Bereich eingehalten wird:

$$0 \leq \frac{A}{L} \leq 2$$

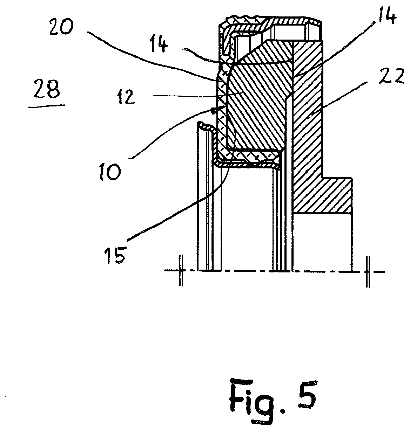

Der Wert für L nimmt positive Werte an. Der Wert für A nimmt positive Werte an, wenn sich das Maß A in Richtung auf die Gleitfläche 14 (Fig. 2), und negativ, wenn sich das Maß A entgegen dieser Richtung erstreckt (Fig. 5).

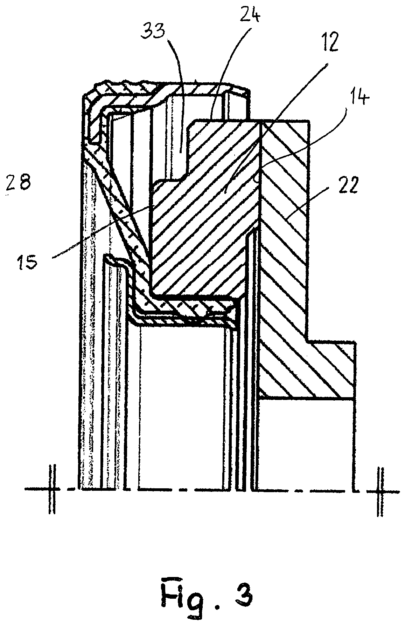

Fig. 2 zeigt eine Gleitringdichtung, die im Wesentlichen gleich ausgebildet ist wie die Gleitringdichtung gemäß Fig. 1. Der Unterschied besteht in der Ausbildung des Überganges von der der Mediumsseite 28 zugewandten Stirnfläche 15 und der äußeren Mantelfläche 24 des Dichtringes 12. Dieser Übergang wird durch die Abschrägung 25 gebildet, die sich über einen größeren axialen Bereich erstreckt als bei der vorigen Ausführungsform. Dadurch ist die Mantelfläche 24 schmaler als beim Ausführungsbeispiel nach Fig. 1. Auch ist die radiale Breite der Stirnfläche 15 geringer als beim vorigen Ausführungsbeispiel. Die Abschrägung 25 ist so gebildet, dass sie über den größten Teil ihrer Länge im Wesentlichen gerade verläuft, im Axialschnitt gesehen, und dann stetig gekrümmt in die Stirnfläche 15 übergeht. Das Maß A und der wirksame Bereich L sind gleich wie beim Ausführungsbeispiel nach Fig. 1. Das Maß A kann durch diese Ausformung negative Werte annehmen. Bei der in Fig. 1 beschriebenen Ausformung sind negative Werte für A nicht möglich. Durch diese Maßnahme wird ein weiter gefasster axialer Einsatzbereich hinsichtlich der Einbaulage ermöglicht. Insbesondere lassen sich so größere axiale Bewegungen ausgleichen. Zudem verhindert eine Ausformung nach Fig. 2 oder 3 ein Anschlagen des Dichtringes und eine Verschiebung der vorteilhaften Pressungsverteilung $F_K$.

Beim Ausführungsbeispiel nach Fig. 3 ist der Dichtring 12 an seiner der Mediumsseite 28 zugewandten Stirnfläche 15 mit einer Ringnut 33 versehen, die in Richtung auf die Mantelfläche 24 und die Stirnfläche 15 offen ist. Im Übrigen ist diese Ausführungsform gleich ausgebildet wie das Ausführungsbeispiel gemäß Fig. 1 und hat dieselben Vorteile wie die Ausführungsform gemäß Fig. 2. Durch die Ausbildung der Ringnut 33 ist der Dichtring einfacher und kostengünstiger, insbesondere durch Sinterverfahren, herstellbar.

Eine hervorragende Auslegung der Membran 10 hinsichtlich der spaltschließenden $F_s$ ergibt sich für die Ausführungsformen nach Fig. 2 und Fig. 3, wenn folgender Bereich eingehalten wird:

$$-0,5 \leq \frac{A}{L} \leq 2$$

Fig. 5 zeigt die Möglichkeit, zwei Dichtringe einzusetzen, die so angeordnet werden, dass die Gleitflächen 14 der beiden Dichtringe 12, 22 auf gleicher Höhe liegen. Diese beiden Dichtringe werden so eingebaut, dass ihre Gleitflächen 14 unter Druck deckungsgleich aneinander liegen.

Das Gehäuse 1 ist so eingebaut, dass das Maß A negative Werte annimmt. In diesem Fall liegt der Kegelabschnitt 20 im Einbauzustand unter elastischer Verformung an der Stirnfläche 15 des Dichtringes 12 an, ohne dass der Mediumsdruck wirkt.

In diesem Falle wird die eine Gleitringdichtung drehfest mit der Welle und die andere Gleitringdichtung gehäusefest montiert. Beide Gleitringdichtungen werden so eingebaut, dass die Dichtringe 12, 22 axial gegeneinander gedrückt werden. Die der Mediumsseite 28 zugewandte Membran 10 wird in der beschriebenen Weise mit Druck belastet. Je nach Höhe dieses Druckes verformt sich der Kegelabschnitt 20 der Membran 10 so, dass sich der Kegelabschnitt 20 an die Stirnfläche 15 des Dichtringes 12 anlegt.

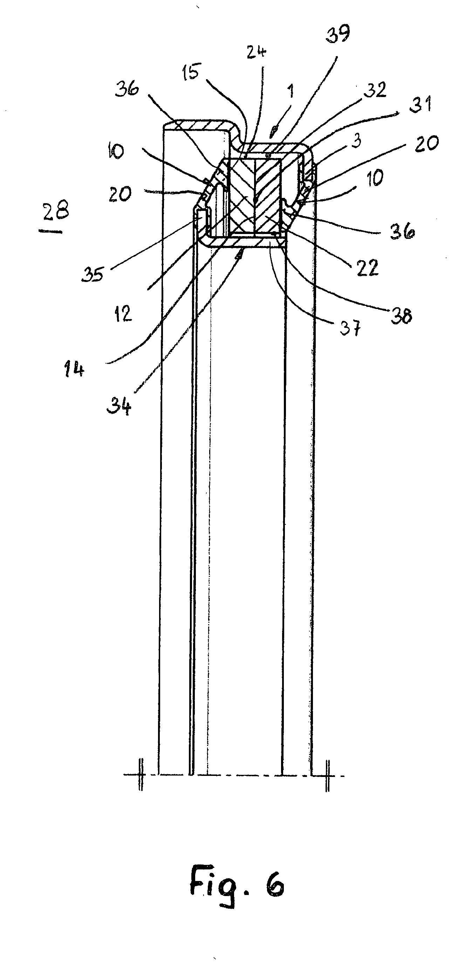

Fig. 6 zeigt eine Ausführungsform, bei welcher die Gleitringdichtung sowohl den Dichtring 22 als auch den Dichtring 12 aufweist. Beide Dichtringe 12, 22 sind durch jeweils eine Membran 10 gehalten. Die beiden Ringe 12, 22 haben rechteckigen Querschnitt und liegen mit ihren Dichtflächen unter Axialkraft dichtend aneinander. Der Dichtring 22 und der Dichtring 12 können gleich ausgebildet sein, wie Fig. 6 zeigt. Beide Ringe können aber auch unterschiedliche Formgebung haben.

Der Dichtring 12 ist an der Membran 10 hängend befestigt. Sie ist mit ihrem radial inneren Ende an einem radial nach außen gerichteten Ringflansch 35 einer Befestigungshülse 34 befestigt, die in der Einbaulage der Gleitringdichtung drehfest auf der Welle sitzt. Das radial äußere Ende der Membran 10 ist an der Stirnfläche 15 des Dichtringes 12 befestigt. Um eine sichere Verbindung zwischen dem Dichtring 12 und der Membran 10 zu gewährleisten, ist der Anbindungsbereich 36 der Membran 10 verbreitert ausgebildet. Dadurch kann der Dichtring 12 über einen verhältnismäßig großen Anbindungsbereich 36 zuverlässig mit der Membran 10 verbunden werden. Die Anbindung der Membran 10 an die Stirnfläche 15 des Dichtringes 12 kann in jeder geeigneten Weise erfolgen, beispielsweise durch Verkleben.

Der Dichtring 22 ist durch eine weitere Membran 10 stehend befestigt. Das radial innere Ende der Membran 10 ist verbreitert ausgebildet und bildet den Anbindungsbereich 36, der wie beim Dichtring 12 über den Umfang verläuft und aufgrund der Verbreiterung eine zuverlässige Befestigung des Dichtringes 22 an der Membran 10 gewährleistet. Das radial äußere Ende der Membran 10 ist am radial nach innen gerichteten Radialflansch 3 des Gehäuses 1 befestigt. Es umgibt die beiden Ringe 12, 22 mit radialem Abstand. Die beiden Ringe ihrerseits umgeben die Befestigungshülse 34 mit Abstand.

Die Befestigungshülse 34 hat einen zylindrischen Ringabschnitt 37, der geringfügig axial über den Dichtring 22 vorsteht und am anderen Ende mit dem radial nach außen gerichteten Ringflansch 35 versehen ist.

Die beiden Membranen 10 liegen derart versetzt zueinander, dass der Anbindungsbereich 36 der einen Membran 10 bis in Höhe der äußeren Mantelfläche 24 des Dichtringes 12 und der Anbindungsbereich 36 der anderen Membran 10 bis in Höhe der radial inneren zylindrischen Mantelfläche 38 des Dichtringes 22 reicht.

Da der Dichtring 12 über die Membran 10 mit der Befestigungshülse 34 verbunden ist, die ihrerseits drehfest auf der Welle sitzt, dreht der Dichtring 12 in eingebauter Lage der Gleitringdichtung. Der Dichtring 22 ist über die Membran 10 mit dem Gehäuse 1 verbunden und bleibt somit stehen.

Wie erläutert, übt die Membran 10 eine Axialkraft auf den Dichtring 22 aus, der dadurch axial gegen den Dichtring 12 gedrückt wird. Im Unterschied zu den vorigen Ausführungsbeispielen erstreckt sich die Gleitfläche 14 des Dichtringes 12 über dessen gesamte radiale Breite. Da der Dichtring 12 und der Dichtring 22 gleich ausgebildet sind, haben die beiden Gleitflächen 14 und 32 des Dichtringes 12 und des Dichtringes 22 gleiche radiale Breite.

Die Membran 10, die der Mediumsseite 28 zugewandt ist, wird durch den Druck des Mediums in der beschriebenen Weise elastisch so verformt, dass sich ihr Kegelabschnitt 20 je nach Höhe des Druckes mehr oder weniger stark in Richtung der Stirnfläche 15 des Dichtringes 12 verformt. Überwiegt bei dieser Ausführungsform die Kraftkomponente $F_{Memb.dyn}$, so dass die Dichtung bei der Anordnung nach Fig. 1 öffnen würde, so folgt bei der Ausführungsform nach Fig.6 der Dichtring 22 der Bewegung des Dichtringes 12. Die Dichtfunktion bleibt erfüllt. Auch bei einer Druckumkehr bzw. einem Unterdruck im Medienraum 28 wird die Funktion sicher erfüllt. In diesem Fall wird die Membran 10, die der Mediumsseite 28 abgewandt ist und vom Medium innen benetzt wird, durch den Unterdruck bzw. die Druckumkehr in der beschriebenen Weise elastisch so verformt, dass sich ihr Kegelabschnitt 20 je nach Höhe des Druckes mehr oder weniger stark in Richtung des Dichtringes 22 verformt.

Zwischen den beiden Ringen 12, 22 und dem Gehäuse 1 befindet sich ein Ringraum 39, über den das Medium an den Dichtspalt 31 zwischen dem Dichtring 12 und dem Dichtring 22 gelangen kann.

Die Gleitringdichtung gemäß Fig. 6 weist die gleichen Wirkungen auf wie die Gleitringdichtung gemäß Fig. 1.

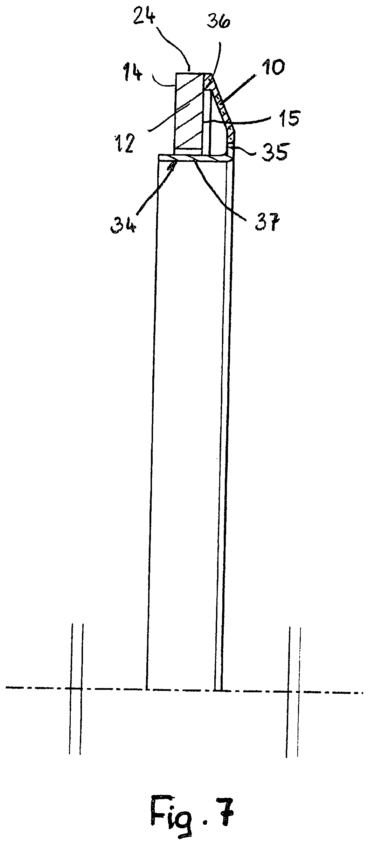

Fig. 7 zeigt die Möglichkeit, den Dichtring 12 hängend an der Membran zu befestigen. Der verdickte Anbindungsbereich 36 der Membran 10 liegt am radial äußeren Rand der Stirnfläche 15 des Dichtringes 12. Wie bei der vorigen Ausführungsform reicht der Anbindungsbereich 36 bis in Höhe der äußeren Mantelfläche 24 des Dichtringes 12.

Das radial innere Ende der Membran 10 ist am radial nach außen gerichteten Ringflansch 35 der Befestigungshülse 34 befestigt. Der Dichtring 12 umgibt den zylindrischen Ringabschnitt 37 der Befestigungshülse 34 mit Abstand.

Der Dichtring 12 hat im Beispielsfalle rechteckigen Querschnitt, wobei die beiden Stirnflächen 15, 14 entsprechend der vorigen Ausführungsform jeweils in Radialebenen liegen.

Der Durchmesser der kegelförmigen Membran 10 nimmt vom Anbindungsbereich 36 aus in Richtung auf den Ringflansch 35 ab.

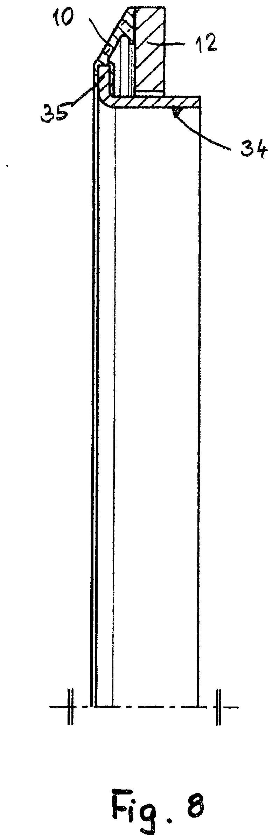

Auch bei der Ausführungsform gemäß Fig. 8 ist der Dichtring 12 hängend an der Membran 10 befestigt. Der Unterschied zur vorigen Ausführungsform besteht lediglich darin, dass der Anschluss der Membran 10 an den Ringflansch 35 der Befestigungshülse 34 so ausgebildet ist, dass der Befestigungsbereich den Ringflansch 35 beidseitig übergreift.

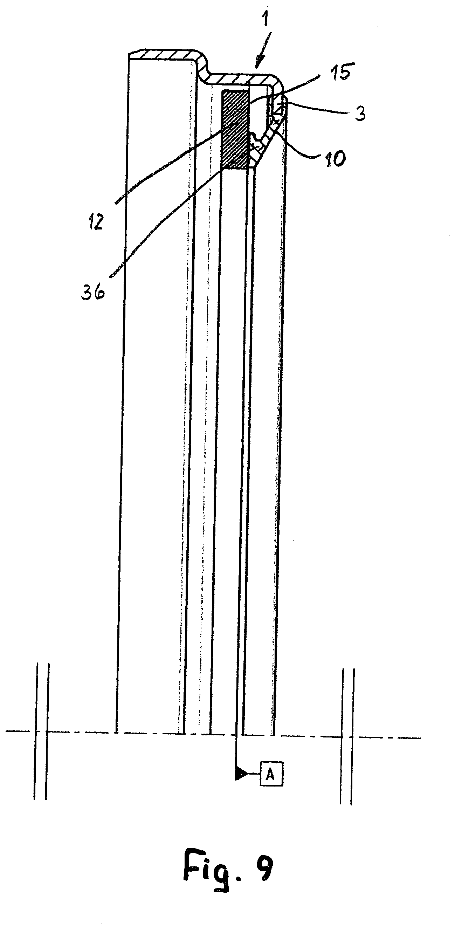

Fig. 9 zeigt beispielhaft die Möglichkeit, den Dichtring 12 auch stehend mit der Membran 10 zu verbinden. In diesem Falle befindet sich der Anbindungsbereich 36 der Membran 10 im radial inneren Bereich der Stirnfläche 15 des Dichtringes 12. Das andere Ende der Membran 10 ist am radial nach innen ragenden Ringflansch 3 des Gehäuses 1 befestigt. Das Gehäuse 1 umgibt mit radialem Abstand den Dichtring 12.

Bei den beschriebenen Ausführungsbeispielen erzeugt die Membran 10 bei geringem oder keinem Druck auf der Mediumsseite 28 eine axiale Kraft, die auf den Dichtring 12 wirkt und diesen in Dichtkontakt mit dem Dichtring 22 stützt. Nimmt der Druck auf der Mediumsseite 28 zu, wird die Membran 10 in der beschriebenen Weise zunehmend stärker elastisch verformt. Durch die gezielte Verformung der Membran 10 bei steigendem Druck führt dies zu einem für den Betrieb günstigen Verhältnis aus spaltöffnenden Kräften $F_o$ und spaltschließenden Kräften $F_s$.

Die Gleitringdichtungen sind vorteilhaft gas- bzw. flüssigkeitsgeschmiert, so dass bereits bei geringen Drehzahlen eine Trennung der beiden Gleitpartner 12, 22 auftritt und auch bei steigenden bzw. höheren Betriebsdrücken auf der Mediumsseite 28 eine stabile Spaltöffnung erreicht wird. Die für diese Gas/Flüssigkeitsschmierung erforderlichen Strukturen können in der Gleitfläche 14 des Dichtringes 12 und/oder in der Gleitfläche 32 des Dichtringes 22 vorgesehen sein.

Um das Verhältnis zwischen den spaltöffnenden und den spaltschließenden Kräften einstellen zu können, kann die Membran 10 gezielt gestaltet werden. Als maßgebliche Kriterien können der Kegelwinkel der Membran 10, die Größe des Bereiches L, die Dicke der Membran und das Material der Membran 10 herangezogen werden. Diese Größen können jeweils für sich, aber auch in Kombination und in Relation zueinander optimal so eingestellt werden, dass das gewünschte vorteilhafte Verhältnis zwischen den spaltöffnenden und den spaltschließenden Kräften erreicht wird.

So kann beispielsweise durch die Größe des Maßes L festgelegt werden, ob sich die Membran 10 bei entsprechenden Kräften leicht oder schwierig elastisch verformen lässt. Ist der Bereich L verhältnismäßig klein, weist die Membran 10 eine größere Steifigkeit auf als bei einem größeren Maß L. Einfluss auf die Steifigkeit der Membran 10 hat auch deren Dicke. Je dünner die Membran 10 ist, desto leichter lässt sie sich bei gegebenem Druck verformen. Auch nimmt das Material der Membran 10 Einfluss auf die Elastizität der Membran 10. Somit kann durch geschickte Auswahl dieser verschiedenen Größen das Maß bestimmt werden, wie sich die Membran 10 bei unterschiedlichen Drücken auf der Mediumsseite 28 elastisch verformen kann.

Des Weiteren kann durch diese Größen festgelegt werden, wie groß die Zugbelastung im Kegelabschnitt 20 der Membran 10 ist.

Außerdem kann auch durch entsprechende Wahl der genannten Größen bestimmt werden, wie groß die Kräfte sind, die auf die Verbindung zwischen der Membran 10 und dem Dichtring 12 wirken.

Mit Hilfe der erfindungsgemäßen Gestaltung ist es möglich, die Trennung der Gleitflächen voneinander nicht nur bei höheren, sondern auch bei kleineren Drehzahlen der Welle zu erreichen. Außerdem kann infolge der beschriebenen Ausbildung eine hohe Druckstabilität bei hohen Drehzahlen gewährleistet werden. Hohe Drücke auf der Mediumsseite 28 führen nicht zu Schäden in der Membran oder an der Verbindungsstelle von der Membran 10 und dem Dichtring 12.

Durch eine gezielte Ausbildung der Stirnfläche 15 des Dichtringes 12 kann der druckabhängige Kraftverlauf positiv beeinflusst werden. Beispiele hierfür zeigen die Fig. 1 bis 3, bei denen die Stirnfläche 15 sowie ihr Übergang zur Mantelfläche 24 unterschiedlich gestaltet sind.

Bei den Ausführungsformen gemäß den Fig. 1 bis 3 werden Nachteile durch Deformation der Membran 10 durch die Klemmhülse 16 bei der Druckbeaufschlagung auf der Innenseite der Membran 10 kompensiert.

Die Verbindung zwischen der Membran 10 und dem Dichtring 12 bzw. dem Dichtring 22 kann form-, stoff- oder kraftschlüssig erfolgen. Der Einsatz der Klemmhülse 16 ist besonders vorteilhaft. Der Ringflansch 18 der Klemmhülse 16 verhindert bei einer Druckbeaufschlagung der Membran 10 auf ihrer Außenseite, dass die Verbindung zwischen dem Dichtring 12 bzw. dem Dichtring 22 auf Zug belastet wird.

## Patentansprüche

1. Gleitringdichtung mit wenigstens einem Dichtring (12, 22), der mit einer Dichtfläche unter Bildung eines Dichtspaltes an einem zweiten Dichtring anliegt und mit einer elastisch verformbaren Membran (10) verbunden ist, die den Dichtring (12, 22) an einer Stirnseite überdeckt und auf der vom Dichtring (12, 22) abgewandten Seite druckbeaufschlagt ist,
**dadurch gekennzeichnet, dass** die Membran (10) einen an den Anbindungsbereich (13) anschließenden Kegelabschnitt (20) aufweist, der in unbelastetem Zustand einen solchen axialen Abstand (A) von der Stirnseite (15) des Dichtringes (12, 22) hat, dass sich der Kegelabschnitt (20) in Abhängigkeit vom Druck im Mediumsraum (28) durch elastische Verformung mehr oder weniger an die Stirnfläche (15) des Dichtringes (12, 22) anlegt und sich dadurch das Verhältnis von spaltschließender Kraft (Fs) und spaltöffnender Kraft (Fo) im Dichtspalt einstellt.

**2.** Gleitringdichtung nach Anspruch 1,
**dadurch gekennzeichnet, dass** die Membran (10) im drucklosen Zustand des abzudichtenden Mediums eine Kraft ($F_{Memb.st}$) derart ausübt, dass die auf die Gleitfläche (14) wirkende Kontaktkraft ($F_K$) am Übergangsbereich der Gleitfläche (14) zum Mediumraum (28, 30) maximal ist.

**3.** Gleitringdichtung nach Anspruch 1 oder 2,
**dadurch gekennzeichnet, dass** sich die Membran (10) unter Druck derart elastisch verformen kann, dass die Kraft ($F_s$) derart ausgeübt wird, dass die auf die Gleitfläche (14) wirkende Kontaktkraft ($F_K$) am Übergangsbereich der Gleitfläche (14) zum Mediumraum (28, 30) maximal ist.

**4.** Gleitringdichtung nach einem der Ansprüche 1 bis 3,
**dadurch gekennzeichnet, dass** die Membran (10) im Bereich ihres größten oder ihres kleinsten Durchmessers an den Dichtring (12) angebunden ist.

**5.** Gleitringdichtung nach einem der Ansprüche 1 bis 4,
**dadurch gekennzeichnet, dass** die Membran (10) mittels einer Klemmhülse (16) mit dem Dichtring (12) verbunden ist.

**6.** Gleitringdichtung nach einem der Ansprüche 1 bis 5,
**dadurch gekennzeichnet, dass** die Membran (10) an einer der Gleitfläche (14) gegenüberliegenden Stirnfläche (15) des Dichtringes (12) angebunden ist, vorteilhaft im radial äußeren oder radial inneren Bereich der Stirnfläche (15) des Dichtringes (12).

**7.** Gleitringdichtung nach einem der Ansprüche 1 bis 6,
**dadurch gekennzeichnet, dass** die Membran (10) den Dichtring (12) mit einem Gehäuse (1) oder einem Halteteil (34) verbindet.

**8.** Gleitringdichtung nach einem der Ansprüche 1 bis 7,
**dadurch gekennzeichnet, dass** sich der Dichtring (12) von der Anbindungsstelle (13, 36) der Membran (10) aus radial nach außen oder radial nach innen erstreckt.

**9.** Gleitringdichtung nach einem der Ansprüche 1 bis 8,
**dadurch gekennzeichnet, dass** sich der Kegelabschnitt (20) zwischen den Anbindungsstellen (13, 36; 3) am Dichtring (12, 22) und am Gehäuse (1) bzw. am Halteteil (34) erstreckt.

**10.** Gleitringdichtung nach einem der Ansprüche 1 bis 9,
**dadurch gekennzeichnet, dass** der Bereich (L) zwischen den beiden Anbindungsstellen (13, 36; 3) die elastische Verformbarkeit der Membran (10) bestimmt.

**11.** Gleitringdichtung nach einem der Ansprüche 1 bis 10,
**dadurch gekennzeichnet, dass** der Bereich (A), der durch den axialen Abstand des Dichtringes (12) vom Gehäuse (1) bestimmt ist, die elastische Verformbarkeit der Membran (10) bestimmt.

**12.** Gleitringdichtung nach einem der Ansprüche 1 bis 11,
**dadurch gekennzeichnet, dass** die der Gleitfläche (14) gegenüberliegende Stirnfläche (15) des Dichtringes (12) so ausgeformt ist, dass negative Werte für A möglich sind.

**13.** Gleitringdichtung nach einem der Ansprüche 1 bis 12,

**dadurch gekennzeichnet, dass** A/L Werte im Bereich von $0 \leq \frac{A}{L} \leq 2$ oder von $-0{,}5 \leq \frac{A}{L} \leq 2$ liegen.

**14.** Gleitringdichtung nach einem der Ansprüche 1 bis 13,
**dadurch gekennzeichnet, dass** der Kegelwinkel und/oder die Dicke und/oder der Werkstoff der Membran (10) die elastische Verformbarkeit der Membran (10) bestimmt.

**15.** Gleitringdichtung nach einem der Ansprüche 1 bis 14,
**dadurch gekennzeichnet, dass** die Gleitringdichtung einen zweiten Dichtring (12, 22) aufweist.

**16.** Gleitringdichtung nach einem der Ansprüche 1 bis 15,
**dadurch gekennzeichnet, dass** die von der Gleitfläche (14) abgewandte Stirnfläche (15) des Dichtringes (12) über eine Abschrägung (25) oder einen Absatz (33) in eine äußere Mantelfläche (24) des Dichtringes (12) übergeht.

**17.** Gleitringdichtung nach einem der Ansprüche 1 bis 16,
**dadurch gekennzeichnet, dass** aerodynamisch oder hydrodynamisch wirksame Strukturen in zumindest einen der Dichtringe (12, 22) eingebracht sind.

**18.** Aggregat, insbesondere Kühlmittelpumpe, Turbolader, Kurbelgehäuse oder Getriebe von Fahrzeugen, mit wenigstens einem Mediumraum, der durch eine Gleitringdichtung nach einem der Ansprüche 1 bis 17 abgedichtet ist.

5
1
6
2b
25
2
2a
4
24
3
A
14
$\bar{F}_s$
$\bar{F}_o$
12
L
20
10
14a
15
19
21
13
17
18
11
16

Fig. 1

A-
A+
25
24
15
12
28
A+
14
$F_s$
$F_a$
$F_k$
L
$F_D$
14a
41
40

Fig. 2

33
24
12
14
28
22
15

Fig. 3

14
2a
9
8
6
7
31
32
2b
22
28
23
26
12
10
16
27
29
17
30

Fig. 4

14
22
14
12
10
15
20
28

Fig. 5

39
24
15
36
1
32
31
3
20
10
10
20
28
10
36
35
22
12
38
37
14
34

Fig. 6

24
36
14
10
12
15
35
34
37

Fig. 7

10
12
35
34

Fig. 8

1
15
3
10
12
36
A

Fig. 9

Europäisches
Patentamt
European
Patent Office
Office européen
des brevets

# EUROPÄISCHER RECHERCHENBERICHT

Nummer der Anmeldung
EP 18 00 0981

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 3 007 724 A (MAXIME AMIRAULT ET AL) 7. November 1961 (1961-11-07) * Spalte 2, Zeile 60 - Zeile 66; Abbildungen 1,7 * ----- | 1-18 | INV. F16J15/34 F16J15/36 |
| A,D | DE 10 2011 122477 A1 (KACO GMBH & CO KG [DE]) 27. Juni 2013 (2013-06-27) * Zusammenfassung; Abbildungen * ----- | 1-18 | |
| A | FR 2 198 593 A6 (MECANIQUE IND INT [LU]) 29. März 1974 (1974-03-29) * Seite 3, Zeile 10 - Zeile 33; Abbildungen * ----- | 1-18 | |
| | | | RECHERCHIERTE SACHGEBIETE (IPC) |
| | | | F16J |

Der vorliegende Recherchenbericht wurde für alle Patentansprüche erstellt

2

| Recherchenort | Abschlußdatum der Recherche | Prüfer |
|---|---|---|
| Den Haag | 8. Mai 2019 | Narminio, Adriano |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 00 0981

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2019

| Im Recherchenbericht angeführtes Patentdokument | Datum der Veröffentlichung | Mitglied(er) der Patentfamilie | Datum der Veröffentlichung |
|---|---|---|---|
| US 3007724 A | 07-11-1961 | GB 866869 A | 03-05-1961 |
| | | NL 101719 C | 08-05-2019 |
| | | US 3007724 A | 07-11-1961 |
| DE 102011122477 A1 | 27-06-2013 | CN 103174668 A | 26-06-2013 |
| | | DE 102011122477 A1 | 27-06-2013 |
| | | EP 2607757 A1 | 26-06-2013 |
| | | US 2013161912 A1 | 27-06-2013 |
| FR 2198593 A6 | 29-03-1974 | AR 205695 A1 | 31-05-1976 |
| | | BE 803930 R | 17-12-1973 |
| | | DE 2344290 A1 | 16-05-1974 |
| | | ES 418447 A2 | 16-04-1977 |
| | | FR 2198593 A6 | 29-03-1974 |
| | | IT 1045792 B | 10-06-1980 |
| | | NL 7312165 A | 06-03-1974 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 102011122477 A1
- DE 102004035658 B4
- DE 102016006106 A1